# FASCICULE DE BREVET EUROPEEN

(11) **EP 1 529 237 B1**
(45) Date de publication et mention de la délivrance du brevet: **03.06.2009**
(21) Numéro de dépôt: 03787852.7
(22) Date de dépôt: 07.08.2003
(51) Int. Cl.: G02F 1/13357, G02B 27/28, H04N 9/31, H04N 5/74

(54) **SYSTEME DE CONVERSION DE POLARISATION POUR UN PROJECTEUR A CRISTAUX LIQUIDES**
EINRICHTUNG ZUR POLARISATIONSUMWANDLUNG IN EINEM FLÜSSIGKRISTALLPROJEKTOR
Polarisation converter system for a liquid crystal projector

(30) Priorité: 15.08.2002 US 219394
(43) Date de publication de la demande: 11.05.2005
(73) Titulaire: Thomson Licensing, 92100 Boulogne-Billancourt (FR)
(72) Inventeur: DRAZIC, Valter, F-35830 Betton (FR)
(74) Mandataire: Le Dantec, Claude
(86) Numéro de dépôt international: PCT/FR2003/050027
(87) Numéro de publication internationale: WO 2004/017124

(56) Documents cités:
- EP-A- 1 120 682
- FR-A- 2 819 899
- US-A- 5 860 721
- US-A- 6 139 157
- NICOLAS C ET AL: "Polarized light source for LCD projection" DISPLAYS, ELSEVIER SCIENCE PUBLISHERS BV., BARKING, GB, vol. 16, no. 1, 1995, pages 43-47, XP004032546 ISSN: 0141-9382
- HECHT, EUGENE: "Optics - 4th Ed. - Chapter 5 "Geometrical Optics"" 2002, ADDISON WESLEY , USA * page 165 - page 171 *

## Description

### Contexte de l'invention

### Domaine technique

Cette invention a trait au domaine des affichages à projection, et plus particulièrement aux systèmes de rétablissement de la polarisation pour des affichages à projection.

### Description de l'art connexe

Les affichages à projection à cristaux liquides (ACL), y compris ceux à cristaux liquides sur silicium (CLS), utilisent typiquement des systèmes de conversion de polarisation de la lumière pour fournir une polarisation particulière de la lumière pour l'illumination de leurs imageurs. Un tel système de conversion de polarisation place un conduit de lumière et un réseau de séparateurs de faisceaux polarisants (SFP) sur la trajectoire de l'illumination entre une lampe et l'imageur. De plus, des lentilles de focalisation de la lumière sont ordinairement placées entre le conduit de lumière et le réseau SFP.

L'efficacité du débit de lumière dans un système de conversion de polarisation peut être troublée par le désalignement des composants du système optique ; par exemple une distance incorrecte entre le réflecteur de la lampe et le conduit de lumière, ou le réseau SFP se trouvant hors du foyer par rapport au conduit de lumière. Suite à ces désalignements, la lumière qui est normalement concentrée sur des sections particulières du réseau SFP déborde sur les sections avoisinantes du réseau ce qui rend la lumière inutilisable pour son but prévu.

Par exemple, si les sections avoisinantes sont aluminées, la lumière qui déborde est reflétée au dehors du réseau SFP.

Si le réseau SFP n'est pas aluminisé, la lumière qui déborde est transmise avec une mauvaise polarisation et absorbée ailleurs dans le système. Donc, un système de conversion de polarisation typique gaspille couramment beaucoup de l'énergie lumineuse prévue pour l'illumination de l'imageur. Cette énergie lumineuse non utilisée pour l'illumination est typiquement dissipée sous forme de chaleur, ce qui peut entraîner la surchauffe du polariseur, surtout si l'affichage est petit. On connaît également dans l'état de la technique les documents de brevet EP1120682 et FR2819899 qui divulguent un projecteur avec une conversion de polarisation. En outre, les caractéristiques techniques du préambule sont divulguées dans le document FR 2819899. Ces systèmes peuvent être affectés d'un mauvais alignement de composants optiques placés avant la conversion de polarisation.

### Résumé de l'invention

La présente invention est en rapport avec un système de conversion de polarisation.

Le système de conversion de polarisation qui est défini dans la revendication 1 inclut un réseau de séparateurs de faisceaux polarisants et au moins une première lentille et une deuxième lentille en cascade pour recevoir la lumière non polarisée produite par une source de lumière. La source de lumière peut être une lampe comprenant un élément et un réflecteur. Les première et deuxième lentilles concentrent la lumière non polarisée sur le réseau de séparateurs de faisceaux polarisants. La position de la première ou de la deuxième lentille peut être réglable pour ajuster le foyer de la lumière non polarisée sur le réseau de séparateurs de faisceaux polarisants. Ou encore, les deux lentilles peuvent être réglables.

Le système de conversion de polarisation peut, en outre, inclure un conduit de lumière placé entre la source de lumière et la première lentille. Le conduit de lumière peut avoir une entrée pour recevoir la lumière non polarisée de la source de lumière et une sortie pour envoyer la lumière non polarisée vers la première lentille.

Le système de conversion de polarisation peut être incorporé dans un affichage ACL et peut inclure un imageur qui reçoit de la lumière polarisée du séparateur de faisceau polarisant. Une troisième et une quatrième lentille peuvent être mises en cascade et placées pour recevoir de la lumière polarisée du réseau de séparateurs de faisceaux polarisants et concentrer la lumière polarisée sur l'imageur. La position d'au moins l'une des troisième et quatrième lentilles peut également être réglable pour ajuster la dimension du faisceau lumineux polarisé afin de correspondre à l'imageur.

La présente invention concerne également une méthode d'ajustement d'un système de conversion de polarisation qui est définie dans la revendication 10 et qui inclut un conduit de lumière, un réseau de séparateurs de faisceaux polarisants et au moins deux lentilles se trouvant entre le conduit de lumière et le réseau de séparateu rs de faisceaux polarisants. La méthode inclut le réglage de la position d'au moins l'une des lentilles pour concentrer la lumière non polarisée sur le réseau de séparateurs de faisceaux polarisants, optimisant ainsi le débit pour l'état de polarisation utilisable. La méthode peut aussi inclure l'étape d'ajustement de la position d'au moins l'une des troisième et quatrième lentilles pour ajuster la taille d'un faisceau de lumière polarisée sur un imageur, la lumière polarisée provenant du réseau de séparateurs de faisceaux polarisants.

### Brève description des dessins

La figure 1 est un diagramme d'un système de conversion de polarisation pour utilisation dans un affichage à cristaux liquides, conformément à la présente invention.
La figure 2 est une vue en perspective d'un cylindre réglable pourvu d'une lentille, conformément à la présente invention.
La figure 3A est une vue de face de faisceaux lumineux incidents sur un réseau de séparateurs de faisceaux polarisants dans un système de conversion de polarisation, conformément à la présente invention.
La figure 3B est une vue de face d'un faisceau lumineux unique incident sur le réseau de séparateurs de faisceaux polarisants de la FIG. 3A, conformément à la présente invention.
La figure 3C est une vue de face d'un faisceau lumineux unique incident sur un réseau de séparateurs de faisceaux polarisants dans un système de conversion de polarisation non ajusté.
La figure 3D montre une quantité de lumière débordant sur une section incorrecte d'un réseau de séparateurs de faisceaux polarisants dans une conversion de polarisation non ajustée
La figure 3E montre une quantité de lumière réfractée sur le réseau de séparateurs de faisceaux polarisants dans un système de conversion de polarisation non ajusté.

### Description détaillée des modes de réalisation préférés

La présente invention est un système de conversion de polarisation pour utilisation dans un système de projection d'affichage à cristaux liquides (ACL), y compris les affichages à cristaux liquides sur silicium (CLS).

Le système de conversion de polarisation comprend une lentille réglable qui peut être ajustée pour concentrer correctement la lumière non polarisée sur des régions particulières d'un réseau de séparateurs de faisceaux polarisants (SFP) afin qu'un maximum de lumière de polarisation adéquate soit réfractée à travers le réseau du SFP. En conséquence, la quantité de lumière utilisée pour illumination dans un imageur est maximisée et la quantité d'énergie de lumière autrement dissipé dans le projecteur est réduite.

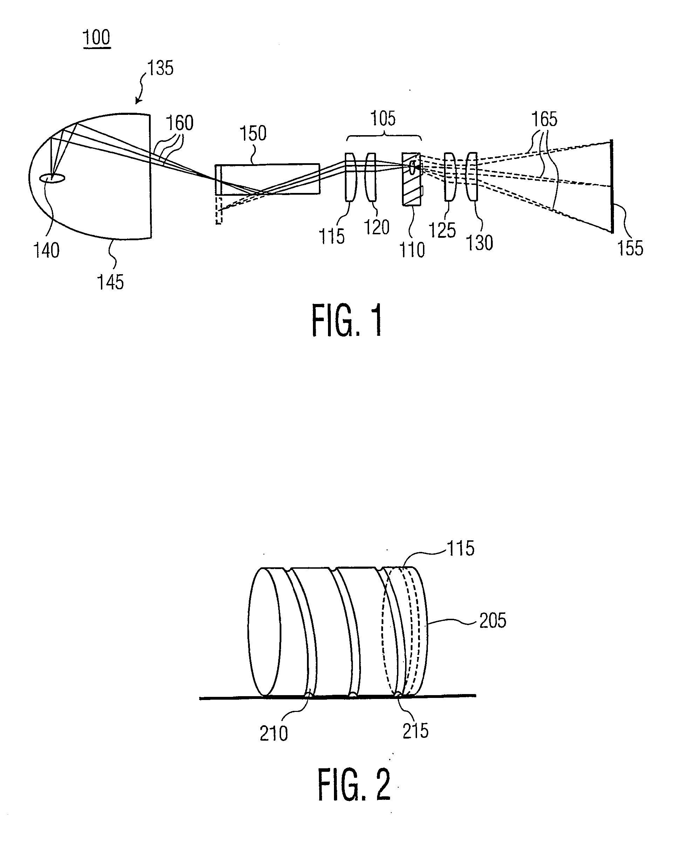

Faisant référence à la FIG. 1, un système lumineux 100 pour usage dans un système de projection ACL est présenté. Le système lumineux comprend un système de conversion de polarisation 105, une source de lumière 135, un conduit de lumière 150 et un imageur 155. La source de lumière 135 peut être une lampe comprenant un réflecteur 145 et un élément 140. Durant l'opération, la lumière non polarisée est produite par la source de lumière 135 et fournie au système de conversion de polarisation 105 par le conduit de lumière 150. Le système de conversion de polarisation 105 polarise la lumière et projette la lumière polarisée sur un imageur 155 par une troisième lentille 125 et une quatrième lentille 130. Dans une configuration alternative, des sources et conduits lumineux multiples peuvent être utilisés pour augmenter l'illumination de l'imageur dans un projecteur ACL de haute performance.

Le système de conversion de polarisation 105 comprend un réseau SFP 110, une première lentille 115, et une deuxième lentille 120. Les première et deuxième lentilles 115 et 120 sont placées afin de recevoir la lumière non polarisée 160 du conduit de lumière 150 et concentrer la lumière non polarisée 160 sur le réseau SFP 110.

Il est à noter que des lentilles supplémentaires peuvent être placées entre le conduit de lumière 150 et le réseau SFP 110 pour augmenter l'opération de convergence des première et deuxième lentilles 115 et 120.

Les troisième et quatrième lentilles peuvent être placées entre le réseau SFP 110 et l'imageur 155 pour concentrer la lumière 165 polarisée par le réseau SFP 110 sur l'imageur 155. De même, des lentilles supplémentaires peuvent être placées entre le réseau SFP 110 et l'imageur 155 pour augmenter l'opération de convergence des troisième et quatrième lentilles 125 et 130.

Le conduit de lumière 150 peut être un tube flexible et semi - transparent qui reflète et réfracte la lumière intérieurement dans son propre corps pour conduire la lumière d'un endroit à un autre. Ainsi, la source de lumière 135 peut se trouver dans toute position souhaitée sur un produit et n'a pas besoin de se trouver proche de l'imageur 155. Réflexion, réfraction et effets de longueur d'onde sont pris en considération lors de la réalisation d'un conduit de lumière, comme le sait la personne compétente dans l'art des systèmes de projection ACL.

La position de la première lentille 115 peut être ajustée le long de l'axe optique pour concentrer la lumière non polarisée 160 sur le réseau SFP 110. Par exemple, en se référant à la FIG. 2, la lentille 115 peut être montée dans un cylindre 205 réglable qui possède une rainure externe en spirale 210 le long de sa circonférence. Le cylindre 205 peut être tourné sur son axe, qui est parallèle à l'axe optique, et mobilisé le long de l'axe. Une fois installé dans un système de conversion de polarisation 105, le cylindre 205 peut être placé contre une pièce fixe en saillie 215 dont la partie fixe en saillie 215 est parfaitement contenue dans le pas de vis rainure 210. Ainsi, la rotation du cylindre 205 peut entraîner le cylindre 205 vers l'avant, le long de l'axe optique, provoquant un ajustement de la position de la lentille 115. Dans un arrangement, la partie en saillie 215 peut être une vis qui peut être serrée contre le cylindre 205 pour fixer la position du cylindre 205, et donc celle de la première lentille 115. Selon une alternative, la lentille 115 peut être fixée et la lentille 120 peut être déplacée par rapport à la lentille 115 au moyen d'une pièce à mouvoir telle un cylindre semblable au cylindre 205. De manière facultative, les deux lentilles 115 et 120 peuvent être configurées pour se déplacer l'une par rapport à l'autre dans le cadre de la présente invention.

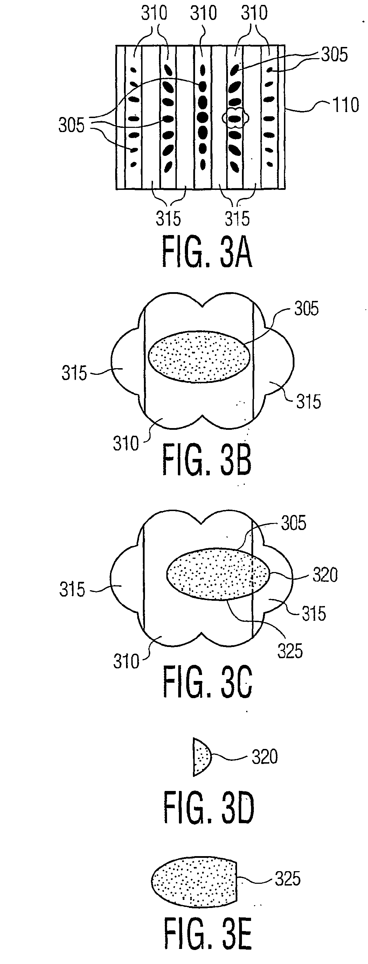

Une vue de face du réseau SFP 110 est montrée en FIG. 3A. Des images multiples 305 de lumière non polarisée 160 sont incidentes au réseau SFP 110 dû aux réflexions dans le conduit de lumière 150. La position de la première lentille 115 peut être ajustée afin que chacune des images 305 soit concentrée sur un élément du réseau SFP 310. Faisant référence à la FIG. 3B qui représente une vue détaillée d'une seule image 305 de la FIG. 3A, le débit maximum de lumière polarisée est accompli lorsque chaque image 305 est centrée sur, et concentrée sur, un seul élément 310. Si l'image 305 n'est pas centrée ou concentrée sur un seul élément 310, comme montré sur la FIG. 3C, une quantité de lumière 320, montrée sur la FIG. 3D, se répand sur un élément avoisinant 315.

Dans le cas où l'élément avoisinant 315 a une couche réflectrice, telle qu'en aluminium, la quantité de lumière 320 qui déborde sur l'élément avoisinant 315 est reflétée à partir du réseau SFP 110. Dans le cas où l'élément avoisinant 315 ne possède pas de revêtement réflecteur, la lumière 320 répandue sur l'élément avoisinant 315 est transmise à travers le réseau SFP, mais avec la mauvaise polarisation. Dans tous les cas, la lumière répandue sur l'élément avoisinant 315 devient pratiquement inutilisable pour le but prévu d'éclairer correctement l'imageur 155. La quantité de lumière 325 qui est incidente sur l'élément 310, montré sur la FIG. 3E, est de la lumière utile qui est traitée par le réseau SFP 110 et passée à l'imageur avec la polarisation correcte.

Il est notable que cette capacité d'ajuster les lentilles 115 et/ou 120 fournit un avantage considérable dans la fabrication des projecteurs ACL. Premièrement, il faut noter que les tolérances industrielles varient généralement dans la production d'ACL. L'adaptabilité de la position des lentilles 115 et/o u 120 dans les systèmes de conversion de polarisation 105 peuvent permettre à chaque système de conversion de polarisation d'être ajusté pour concentrer la lumière non polarisée 160 sur le réseau SFP 110, et de cette façon compenser les tolérances de fabrication et arriver à maximiser l'efficacité de la lumière dans chaque projecteur ACL produit.

Deuxièmement, l'énergie lumineuse qui n'est pas utilisée pour éclairer un imageur est souvent dissipée sous forme de chaleur. Cette dissipation de la chaleur peut provoquer l'échauffement de composants ACL, surtout dans les petits projecteurs ACL. La capacité d'ajuster le foyer de lumière dans les projecteurs ACL pour maximiser l'efficacité lumineuse peut réduire des effets de surchauffe.

Il faut comprendre que les exemples et configurations décrites ici n'ont qu'un but explicatif et que diverses modifications ou changements qui en découlent peuvent être suggérés par des personnes compétentes dans l'art et seront incluses dans l'étendue de cette invention qui est définie par les revendications ci-jointes. L'invention peut prendre beaucoup d'autres formes spécifiques à l'intérieur de la portée des revendications.

## Revendications

1. Système de conversion de polarisation (105) pour un projecteur à cristaux liquides comprenant :
- un réseau de séparateurs de faisceaux polarisants (110) comprenant des éléments (310, 315); et
- au moins une première lentille (115) et une deuxième lentille (120) en cascade pour recevoir une lumière non polarisée (160) produite par une source de lumière (135) et concentrant ladite lumière non polarisée sur ledit réseau de séparateurs de faisceaux polarisants ;
**caractérisé en ce que** le système comprend des moyens de réglage de la position d'au moins l'une desdites première et deuxième lentilles arrangés de façon à compenser les tolérances de fabrication et pour ajuster la position de ladite lumière non polarisée sur lesdits éléments du réseau de séparateurs de faisceaux polarisants ;
et **en ce qu'**au moins une desdites première (115) et deuxième (120) lentilles, est mobile en rotation autour de son axe et comprend lesdits moyens pour être mobile en translation le long dudit axe lorsqu'elle tourne, au moins une desdites première et deuxième lentilles étant montée dans un cylindre qui possède une rainure externe en spirale le long de sa circonférence,
le système comprenant une pièce fixe en saillie (215) s'insérant dans la rainure externe du cylindre, la rotation du cylindre entraînant le cylindre le long de l'axe optique et provoquant un ajustement de la position de la lentille associée.

2. Système selon la revendication 1, comprenant en outre ;
un conduit de lumière (150) placé entre ladite source de lumière et ladite première lentille, ledit conduit de lumière ayant une entrée pour recevoir ladite lumière non polarisée de ladite source de lumière et une sortie pour envoyer ladite lumière non polarisée vers ladite première lentille.

3. Système selon la revendication 1, dans lequel la position d'au moins l'une desdites première et deuxième lentilles est fixe.

4. Système selon la revendication 1, dans lequel lesdites première et deuxième lentilles sont réglables l'une par rapport à l'autre.

5. Système selon la revendication 1, dans lequel ladite source de lumière est une lampe qui comprend un élément (140) et un réflecteur (145).

6. Système selon l'une quelconque des revendications 1 à 5, dans lequel le système comprend des moyens pour déplacer la seconde lentille relativement à la première lentille.

7. Système d'affichage à projection comprenant :
- un système de conversion de polarisation (105) selon l'une quelconque des revendications 1 à 6 ; et
- un imageur (155) qui reçoit la lumière polarisée issue dudit réseau de séparateurs de faisceaux polarisants.

8. Système selon la revendication 7, comprenant en outre une troisième et une quatrième lentille mises en cascade et placées pour recevoir la lumière polarisée dudit réseau de séparateurs de faisceaux polarisants et concentrer ladite lumière polarisée sur ledit imageur.

9. Système selon la revendication 8, dans lequel une position d'au moins l'une desdites troisième et quatrième lentilles est réglable pour ajuster une taille d'un faisceau de ladite lumière polarisée sur ledit imageur.

10. Méthode d'ajustement d'un système de conversion de polarisation (105) qui inclut un conduit de lumière (150), un réseau de séparateurs de faisceaux polarisants (110) et au moins deux lentilles se trouvant entre le conduit de lumière et le réseau de séparateurs de faisceaux polarisants comprenant des éléments (310, 315), la méthode comprenant :
l'ajustement de la position d'au moins l'une des lentilles ;
**caractérisée en ce que** l'étape d'ajustement concentre une lumière non polarisée sur lesdits éléments du réseau de séparateurs de faisceaux polarisants, de façon à compenser les tolérances de fabrication et de manière à ajuster la position de ladite lumière non polarisée (160) provenant du réseau de séparateurs de faisceaux polarisants ;
et **en ce qu'**au moins une desdites première (115) et deuxième (120) lentilles, est mobile en rotation autour de son axe et comprend des moyens pour être mobile en translation le long dudit axe lorsqu'elle tourne, au moins une desdites première et deuxième lentilles étant montée dans un cylindre qui possède une rainure externe en spirale le long de sa circonférence,
le système comprenant une pièce fixe en saillie (215) s'insérant dans la rainure externe du cylindre, la rotation du cylindre entraînant le cylindre le long de l'axe optique et provoquant un ajustement de la position de la lentille associée.

11. Méthode selon la revendication 10, dans laquelle le système comprend en outre une troisième et une quatrième lentille mises en cascade et placées pour recevoir la lumière polarisée issue dudit réseau de séparateurs de faisceaux polarisants et concentrer ladite lumière polarisée sur un imageur, ladite méthode comprenant en outre une étape d'ajustement de la position d'au moins l'une des troisième et quatrième lentilles (125, 130) pour ajuster la taille d'un faisceau de ladite lumière polarisée sur ledit imageur (155).

## Claims

1. Polarization conversion system (105) for a liquid crystal projector comprising:
- a network of polarizing beam splitters (110) comprising elements (310, 315), and
- at least a first lens (115) and a second lens (120) cascaded to receive a non-polarized light (160) produced by a light source (135) and concentrating said non-polarized light on said network of polarizing beam splitters,
**characterized in that** the system comprises the means of regulating the position of at least one of said first and second lenses arranged so as to compensate the fabrication tolerances and adjust the position of said non-polarized light on said elements of the network of polarizing beam splitters,
and **in that** at least one of said first (115) and second (120) lenses, is mobile in rotation around its axis and comprises said means to be mobile in translation along said axis when it turns, at least one of said first and second lens being mounted in a cylinder that has an external spiral groove the length of its circumference,
the system comprising a part fixed in projection (215) being inserted in the external groove of the cylinder, the rotation of the cylinder leading the cylinder along the optical axis and provoking an adjustment of the position of the associated lens.

2. System according to claim 1, also comprising,
a light conductor (150) placed between said light source and said first lens, said light conductor having an input to receive said non-polarized light from said light source and an output to transmit said non-polarized light towards said first lens.

3. System according to claim 1, in which the position of at least one of said first and second lenses is fixed.

4. System according to claim 1, in which said first and second lenses are adjustable with respect to one another.

5. System according to claim 1, in which said light source is a lamp that comprises an element (140) and a reflector (145).

6. System according to any one of claims 1 to 5, in which the system comprises the means to displace the second lens relative to the first lens.

7. Projection display system comprising:
- a polarization conversion system (105) according to any one of claims 1 to 6, and
- an imaging device (155) that receives polarized light from said network of polarizing beam splitters.

8. System according to claim 7, comprising in addition a third and a fourth lens cascaded and placed to receive the polarized light from said network of polarizing beam splitters and concentrating said polarized light on said imaging device.

9. System according to claim 8, in which the position of at least one of said third and fourth lenses is adjustable to adjust the size of a beam of said polarized light on said imaging device.

10. Method of adjustment of a polarization conversion system (105) that includes a light conductor (150), a network of polarizing beam splitters (110) and at least two lenses being located between the light conductor and the network of polarizing beam splitters comprising elements (310, 315), the method comprising:
adjustment of the position of at least one of the lenses;
**characterized in that** the adjustment step concentrates a non-polarized light on said elements of the network of polarizing beam splitters, so as to compensate the fabrication tolerances and in a way to adjust the position of said non-polarized light (160) coming from the network of polarizing beam splitters,
and **in that** at least one of said first (115) and second (120) lenses, is mobile in rotation around its axis and comprises said means to be mobile in translation along said axis when it turns, at least one of said first and second lens being mounted in a cylinder that has an external spiral groove the length of its circumference,
the system comprising a part fixed in projection (215) being inserted in the external groove of the cylinder, the rotation of the cylinder leading the cylinder along the optical axis and provoking an adjustment of the position of the associated lens.

11. Method according to claim 10, in which the system comprising in addition a third and a fourth lens cascaded and placed to receive the polarized light from said network of polarizing beam splitters and concentrating said polarized light on an imaging device, said method comprising in addition a position adjustment step of at least one of the third and fourth lenses (125, 130) to adjust the size of a beam of said polarized light on said imaging device (155).

## Patentansprüche

1. Polarisationsumwandlungssystem (105) für einen Flüssigkristallprojektor mit
- einem Gitter aus polarisierenden Strahlenteilern (110) mit Elementen (310, 315) und
- mindestens einer ersten Linse (115) und einer zweiten Linse (120), die kaskadenartig angeordnet sind, um ein von einer Lichtquelle (135) erzeugtes nicht polarisiertes Licht (160) zu empfangen, und das nicht polarisierte Licht auf das Gitter aus polarisierenden Strahlenteilern konzentrieren,
**dadurch gekennzeichnet, dass** das System Mittel zur Einstellung der Position mindestens einer der ersten und der zweiten Linse umfasst, welche Mittel angeordnet sind, um die Fertigungstoleranzen auszugleichen und die Position des nicht polarisierten Lichts auf den Elementen des Gitters aus polarisierenden Strahlenteilern zu justieren, und dass mindestens eine der ersten (115) und der zweiten (120) Linse um ihre Achse drehbeweglich ist und die genannten Mittel umfasst, um entlang der Achse verschieblich zu sein, wenn sie sich dreht, wobei mindestens eine der ersten und der zweiten Linse in einem Zylinder montiert ist, der eine externe spiralförmige umfängliche Rille aufweist, wobei das System ein festes vorspringendes Teil (215)umfasst, das sich in die externe Rille des Zylinders einfügt, wobei die Drehung des Zylinders den Zylinder entlang der optischen Achse mitnimmt und eine Justierung der Position der zugeordneten Linse bewirkt.

2. System nach Anspruch 1, umfassend ferner einen Lichtkanal (150), der zwischen der Lichtquelle und der ersten Linse angeordnet ist, wobei der Lichtkanal einen Eintritt, um das nicht polarisierte Licht aus der Lichtquelle zu empfangen, und einen Austritt, um das nicht polarisierte Licht auf die erste Linse zu senden, aufweist.

3. System nach Anspruch 1, bei dem die Position von mindestens einer der ersten und der zweiten Linse fest ist.

4. System nach Anspruch 1, bei dem die erste und die zweite Linse in Bezug aufeinander einstellbar sind.

5. System nach Anspruch 1, bei dem die Lichtquelle eine Lampe ist, die ein Element (140) und einen Reflektor (145) umfasst.

6. System nach einem der Ansprüche 1 bis 5, bei dem das System Mittel umfasst, um die zweite Linse relativ zu der ersten Linse zu bewegen.

7. Projektionsanzeigesystem mit
- einem Polarisationsumwandlungssystem (105) nach einem der Ansprüche 1 bis 6 und
- einem Bildgeber (155), der das polarisierte Licht aus dem Gitter aus polarisierenden Strahlenteilern empfängt.

8. System nach Anspruch 7, umfassend ferner eine dritte und eine vierte Linse, die kaskadenartig und derart angeordnet sind, dass sie das polarisierte Licht aus dem Gitter aus polarisierenden Strahlenteilern empfangen und das polarisierte Licht auf den Bildgeber konzentrieren.

9. System nach Anspruch 8, bei dem eine Position mindestens einer der dritten und der vierten Linse einstellbar ist, um eine Größe eines Strahls des polarisierten Lichts auf dem Bildgeber zu justieren.

10. Verfahren zum Justieren eines Polarisationsumwandlungssystems (105), das einen Lichtkanal (150), ein Gitter aus polarisierenden Strahlenteilern (110) und mindestens zwei Linsen umfasst, welche sich zwischen dem Lichtkanal und dem Gitter aus polarisierenden Strahlenteilern mit Elementen (310, 315) befinden, wobei das Verfahren umfasst:
die Justierung der Position mindestens einer der Linsen,
**dadurch gekennzeichnet,**
**dass** bei dem Schritt der Justierung ein nicht polarisiertes Licht auf die Elemente des Gitters aus polarisierenden Strahlenteilern derart konzentriert wird, dass die Fertigungstoleranzen ausgeglichen werden und dass die Position des nicht polarisierten Lichts (160) aus dem Gitter aus polarisierenden Strahlenteilern justiert wird, und
**dass** mindestens eine der ersten (115) und der zweiten (120) Linse um ihre Achse drehbeweglich ist und Mittel umfasst, um entlang der Achse verschieblich zu sein, wenn sie sich dreht, wobei mindestens eine der ersten und der zweiten Linse in einem Zylinder montiert ist, der eine externe spiralförmige umfängliche Rille aufweist,wobei das System ein festes vorspringendes Teil (215) umfasst, das sich in die externe Rille des Zylinders einfügt, wobei die Drehung des Zylinders den Zylinder entlang der optischen Achse mitnimmt und eine Justierung der Position der zugeordneten Linse bewirkt.

11. Verfahren nach Anspruch 10, bei dem das System ferner eine dritte und eine vierte Linse umfasst, die kaskadenartig und derart angeordnet sind, dass sie das polarisierte Licht aus dem Gitter aus polarisierenden Strahlenteilern empfangen und das polarisierte Licht auf einen Bildgeber konzentrieren, wobei das Verfahren ferner einen Schritt des Justierens der Position von mindestens einer der dritten und der vierten Linse (125, 130) umfasst, um die Größe eines Strahls des polarisierten Lichts auf dem Bildgeber (155) zu justieren.
